# EUROPEAN PATENT SPECIFICATION

(11) **EP 1 221 272 B1**
(45) Date of publication and mention of the grant of the patent: **04.01.2006**
(21) Application number: 00967939.0
(22) Date of filing: 11.10.2000
(51) Int. Cl.: H04Q 7/38

(54) **A METHOD AND SYSTEM FOR PROTECTING A USER IDENTIFIER**
VERFAHREN UND SYSTEM FÜR DEN SCHUTZ EINER NUTZERIDENTITÄT
PROCEDE ET SYSTEME DE PROTECTION D'UNE IDENTIFICATION D'UTILISATEUR

(30) Priority: 11.10.1999 FI 992185
(43) Date of publication of application: 10.07.2002
(73) Proprietor: TeliaSonera Finland Oyj, 00510 Helsinki (FI)
(72) Inventor: LAMMI, Tapio, FIN-53850 Lappeenranta (FI); LINDQVIST, Anssi, FIN-00610 Helsinki (FI); RUOTTINEN, Timo, FIN-53810 Lappeenranta (FI)
(74) Representative: Simmelvuo, Markku Kalevi
(86) International application number: PCT/FI2000/000873
(87) International publication number: WO 2001/028273

(56) References cited:
- EP-A2- 0 982 958
- JP-A- 1 019 147
- B. ASKWITH, M. MERABTI, Q. SHI, K. WHITELEY: 'Achieving user privacy in mobile networks' 08 December 1997, pages 108 - 116, XP002023113

## Description

The invention relates to telecommunication systems. More specifically, the invention relates to a method and a system for protecting the user identifier of a service user from the service provider in a mobile communication network, which service concerned is a content service utilizing the geographical information of the service user.

### PRIOR ART

The network operators of the mobile communication networks have remarkably increased the number of their services and the co-operation with the service providers in the last few years. The number of services is wide, and most of the services do not require any specific solutions of the operator, e.g. for guaranteeing the protection of identity of the user. Nowadays, the operators are, however, willing to develop, e.g. their content services, and the meaning of the protection of identity is remarkably emphasized, because the services provided may include sensitive information comparable, e.g. with the geographical information. Generally, people speak about a client, which means the user of the service, and about a network operator or a telephone operator who offer network services, such as call transfer, call waiting, answering services, conference calls, etc. Now as a third party, there are the content providers who are hereinafter referred to as service providers. These interest groups provide content services, such as horoscopes, news services, timetables etc. The appearing of a third party in between the client and the network operator may cause changes to the compiling of such identifiers that may insult the protection of data privacy of the client, i.e. the user of the service. According to the present legislation, the content provider cannot be given such information that might insult the protection of identity of the client.

For example in the GSM, there are several registers defined that are different databases. On the home location register HLR, there are the subscriber details permanently stored that are needed in the production of services regardless of the fact of where the subscriber each time is located. Such subscriber details are, e.g. the international mobile subscriber identity (IMSI, International Mobile Subscriber Identity), the mobile station ISDN number (MSISDN), additional services agreed by the subscriber, certain information of the location of that moment of the subscriber. Prior-art technique represents also the servicing mobile location centre (SMLC, Servicing Mobile Location Centre), which is used in locating the position of that time of the user of the service. Before, people used to talk about a mobile location centre (MLC, Mobile Location Centre), but now that the position of that moment of the subscriber of the services has to be accurately located, people have changed to the use of this aforementioned SMLC.

On the visitor location register VLR, the subscriber details that are needed in production of the services are stored temporarily for the period the subscriber is located in the service area of the servicing mobile location centres of the VLR. When the mobile station is detected in the service area in question, the VLR asks the HLR for these details. In addition to the information in the HLR, the temporary mobile subscriber identity (TMSI, Temporary Mobile Subscriber Identity) is stored on the VLR. This is used in signaling in radio path instead of the IMSI because the permanent identity is wished to keep secret. In addition, in the VLR there is the location area identity (LAI, Location Area Identity) of that time of the subscriber.

The authentication centre (AUC, Authentication Centre) is a database, which includes subscriber details relating to the information security. The AUC checks whether the subscriber is the one who he or she claims to be (IMSI/TMSI). AUC also includes the keys of the encryption used in the radio path.

In addition, as for prior art, the meaning of the wireless application protocol (WAP, Wireless Application Protocol) is not to be ignored as an alternative way of action when planning components managing the service request of the network operator. The use of the wireless application protocol is becoming common in solutions in which a connection is needed between portable terminal devices, such as mobile stations and the Internet applications, e.g. electronic mail, WWW (World Wide Web), news groups. The wireless application protocol provides an architecture, which adapts mobile phones, browser programs of mobile phones, and the WWW to work as a functional entity. A problem has become the amount of information transmitted in the network between the client, network operator and the service provider. The operator has to be able to take care of the protection of identity of the client and to try to prevent information from ending up into the hands of those not concerned. At the same time, the operator has to be able to pick up from the information flow the essential information needed in order to be able to address the service to the right subscriber.

In article: "Achieving User Privacy in Mobile Networks", B. Askwith, M. Merabti, Q. Ski, K. Whiteley, December 8, 1997, pages 108 - 116, there is described a solution for ensuring privacy in a mobile communication system. In the solution, the location of a mobile subscriber is hidden from the home network, the identity of the mobile subscriber is hidden from the visited network and the confidentiality of message is ensured. Firstly, at least one anonymity server is used to hide the identity of the sender of a given message from the receiver of that message. The message to be transmitted is encrypted using a public key of the recipient. Thereupon, the source address is encrypted using a key known to the anonymity server and enclosed in the message. The recipient encloses the encrypted source address in reply messages to the anonymity server in order to enable the routing of these reply messages to the source address. Pertaining to the architecture of mobile communication networks, the article discloses a system in which a mobile subscriber is authenticated via a local network at the request of a home network. After the authentication, the home network informs the local network of the success of the authentication. The local network is authenticated by the mobile subscriber to the home network so that the local network blindly signs a token sent by the home network and the signed token is sent via mobile subscriber back to the home network. The home network informs to the mobile subscriber the success of the authentication of the local network. Between the home network and a visited network is employed a mix network comprising a number of anonymity servers.

The solution described by Askwith et al. has the disadvantage that it is too complicated for the cases where only the identity of the mobile subscriber must be concealed from an external value added service provider. For example, the providing of a mix network requires an extra investment from a mobile network operator. Further, the solution described by Askwith et al. does not disclose how to act in the case of three-party communication, for example, when the third party is a positioning service provided in association with a mobile communication network.

### OBJECTIVE OF THE INVENTION

The objective of the present invention is to disclose a new kind of method and system that eliminates the disadvantages referred to above, or at least significantly alleviates them. One specific objective of the invention is to disclose a method and a system that make it possible to protect the user identifier of a service user from the service provider in a mobile communication network. However, the protection is effected at such a level that the service provider gets the information sufficient enough for him or her to be able to address the service to the right subscriber.

### BRIEF DESCRIPTION OF THE INVENTION

In the present invention, a user identifier of a service user is protected from the service provider in a mobile communication network, such as the GSM network (Global System for Mobile Telecommunications, GSM). The term "service provider" refers to the provider of the content services in distinction from the telephone operator providing network services. Correspondingly, the term "service" refers to the content service in distinction from the network services. More specifically, the service is hereinafter used to refer to such a content service that utilizes the geographical information of the service user.

A service request containing the user identifier of the service user is sent from the terminal device of the service user. The user identifier means the way of identifying the user unambiguously used by the mobile station in use and known in itself, such as the MSISDN number (Mobile Subscriber Integrated Services Digital Network, MSISDN), IMEI code (International Mobile station Equipment Identity, IMEI) or the TMSI identity (Temporary Mobile Subscriber Identity, TMSI). A modified service request is transmitted to the equipment of the service provider by means of which a service response is generated. The service response is sent from the equipment of the service provider, and is transmitted to the terminal device of the service user. The service request is directed to the service gateway, which asks the encrypting party for the anonymous identifier corresponding to the user identifier in question. The anonymous identifier in question is generated by means of an encryption device. The user identifier and the corresponding anonymous identifier are stored on an identification database. The anonymous identifier is sent to the service gateway in which the service request is modified in such a way that the user identifier is substituted with the anonymous identifier. After this, the modified service request is directed to the equipment of the service provider. A geographical information request containing the anonymous identifier is sent from the equipment of the service provider to the location register, which retrieves from the database a user identifier corresponding to the anonymous identifier in question. The user identifier in question helps to find out the geographical information of the service user. The geographical information and the corresponding anonymous identifier are sent to the equipment of the service provider. The service response is generated based on the geographical information in question. The service response containing the anonymous identifier is directed to the service gateway, which retrieves from the identification database a user identifier corresponding to the anonymous identifier. The service response is directed to the terminal device of the service user by means of the user identifier in question.

In an embodiment of the invention, the user identifier and the corresponding anonymous identifier are eliminated from the identification database after a predetermined time.

In an embodiment of the invention, the user identifier and the corresponding anonymous identifier are eliminated from the identification database after a predetermined number of inquiries.

In an embodiment of the invention, the geographical information is found out by retrieving it from the SMLC centre (Servicing Mobile Location Centre, SMLC) of the mobile communication network.

In an embodiment of the invention, the geographical information is found out by retrieving it from the location database maintained by the location register.

In an embodiment of the invention, the service gateway is arranged in conjunction with the SMS centre (Short Message Service, SMS) of the mobile communication network.

In an embodiment of the invention, the service gateway is arranged in conjunction with the WAP gateway (Wireless Application Protocol, WAP) of the mobile communication network.

In an embodiment of the invention, the user identifier is the MSISDN number of the terminal device of the service user.

In an embodiment of the invention, the mobile communication network is a GSM network.

As compared with prior art the present invention provides the advantage that it makes it possible to protect the user identifier of the service user from the content provider. This on the other hand makes it possible to develop and/or provide such content services of a mobile communication network that utilize the geographical information of the service user because thanks to the invention, no sensitive information resulting from the combination of the identity and the location of the service user is going to end up to the third party, i.e. the content provider.

### BRIEF DESCRIPTION OF THE DRAWINGS

In the following section, the invention will be described by the aid of the attached examples of its embodiments with reference to the attached drawing, in which
Fig. 1 schematically represents one system of the invention; and
Fig. 2 schematically represents another system of the invention.

### DETAILED DESCRIPTION OF THE INVENTION

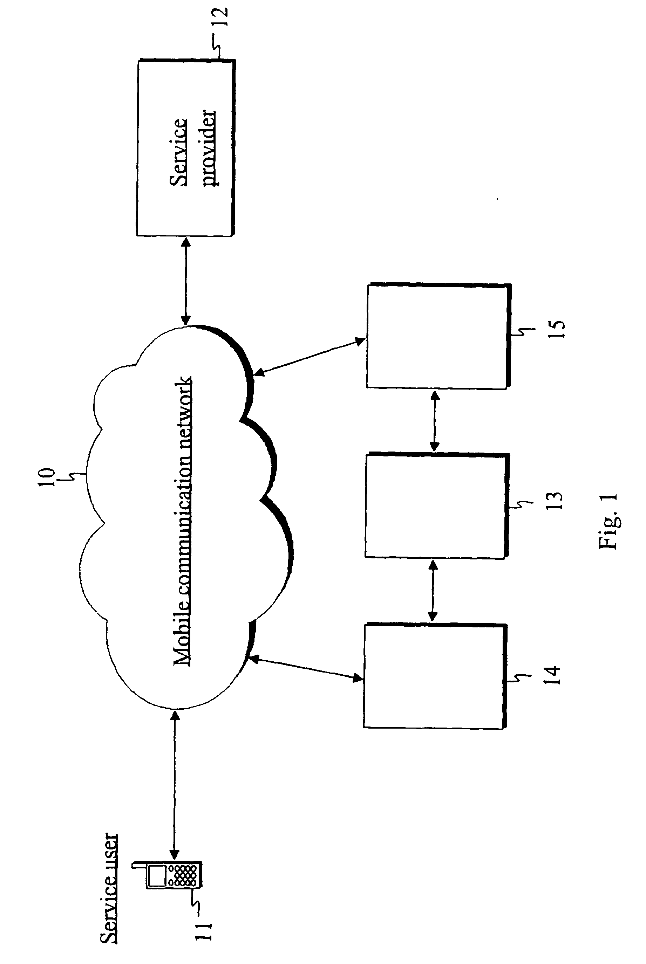

Fig. 1 is a flow chart illustrating one system of the invention. In the figure, the terminal device of the service user 11 has been connected to the mobile communication network 10, e.g. to a digital mobile network. From the aforementioned terminal device 11, a service request is sent to the mobile communication network 10. Connected to the aforementioned mobile communication network is also the equipment of the service provider 12, which may be, e.g. a computer or some other suitable equipment or a software configuration. The aforementioned equipment is used to maintain, e.g. the content services and address them to right clients. The system also comprises a service gateway 14 which is connected to the mobile communication network 10 and which is arranged, e.g. in conjunction with the SMS centre or the WAP gateway. Further, the service gateway may be implemented as a separate entity. In addition, the system comprises, in accordance with the invention, an encrypting device 13 in whose conjunction there is an identification database 13 arranged. In addition, the system comprises, in accordance with the invention, a location register 15 in whose conjunction it is possible to arrange a location database 15 for maintaining the geographical information.

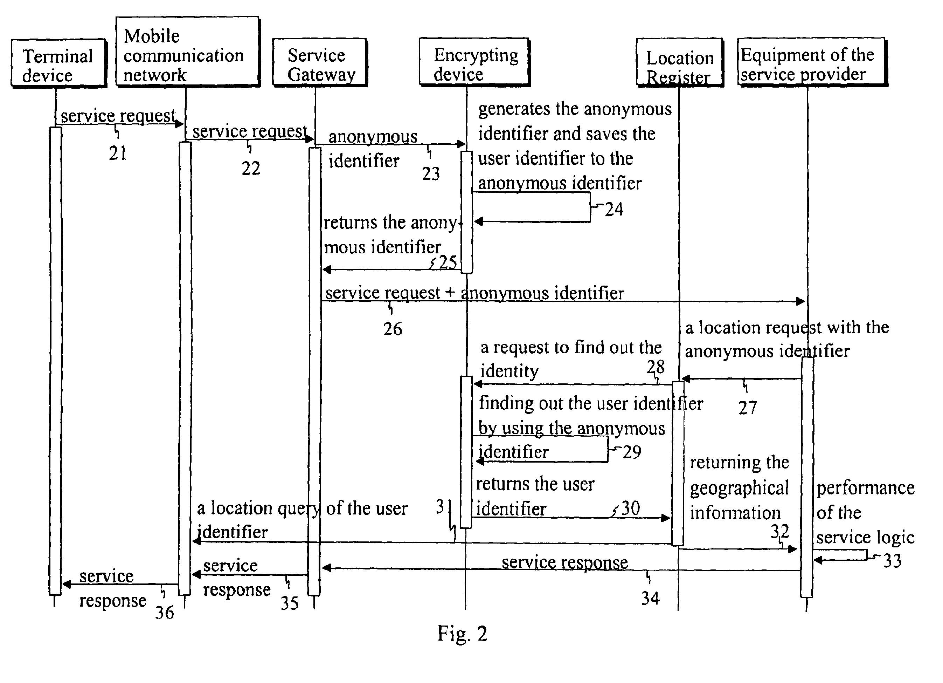

Fig. 2 is a flow chart illustrating another method of the invention. At a step 21, from the terminal device of the service user, such as the GSM telephone, a service request containing the user identifier of the service user is sent. In the exemplary case as illustrated in the figure, the user identifier is the MSISDN number of the service user. In accordance with the invention, at a step 22, the mobile communication network directs the service request to the service gateway, which at a step 23 sends to the encrypting device a request to give the anonymous identifier corresponding to the user identifier in question. The aforementioned anonymous identifier is generated by means of the encrypting device, and the user identifier and the corresponding anonymous identifier are stored on the identification database at a step 24. At a step 25, the anonymous identifier is sent to the service gateway, which modifies the service request by substituting the user identifier with the anonymous identifier. After this, the modified service request is directed to the equipment of the service provider at a step 26. At a step 27, from the equipment of the service provider, a geographical information request containing the anonymous identifier is sent to the location register, which at the steps 28, 29 and 30 finds out the user identifier corresponding to the anonymous identifier in question by means of the identification database and/or the encrypting device. By means of the user identifier in question, the geographical information of the service user is found out at a step 31 using the location register. The geographical information is found out, e.g. by retrieving it from the SMLC centre (Servicing Mobile Location Centre, SMLC) of the mobile communication network. Alternatively, e.g. in the location register, a location database is maintained from which the geographical information is retrieved, if necessary. At a step 32, the geographical information and the anonymous identifier corresponding to it are sent to the equipment of the service provider. The service response is generated based on the geographical information in question at a step 33. At a step 34, the service response containing the anonymous identifier is directed to the service gateway, which retrieves the user identifier corresponding to the anonymous identifier from the identification database by repeating the steps. The service response is directed to the terminal device of the service user based on the user identifier in question at steps 35-36.

## Claims

1. A method for protecting the user identifier of a service user from the service provider in a mobile communication network, which service to be provided/used in question is a content service utilizing the geographical information of the service user and which method comprises the steps of:
sending a first service request containing the user identifier of the service user from the terminal device of the service user (11, 21),
transmitting a second service request to the equipment of the service provider (12, 26),
generating a service response using the equipment of the service provider (12, 33),
sending the service response from the equipment of the service provider (12, 34), and
transmitting the service response to the terminal device of the service user (11, 36),
**characterised in that** the method further comprises the steps of:
directing the first service request to a service gateway (14, 22),
asking an encryption device (13) for the service-request-specific anonymous identifier corresponding to the user identifier (23),
generating the anonymous identifier by means of the encryption device (13) and storing the user identifier and the corresponding anonymous identifier on an identification database (24),
sending the anonymous identifier to the service gateway (14, 25),
modifying the first service request by substituting the user identifier with the anonymous identifier to produce a second service request,
directing the second service request to the equipment of the service provider (12, 26),
sending a geographical information request containing the anonymous identifier from the equipment of the service provider (12) to a location register (15, 27),
retrieving the user identifier corresponding to the anonymous identifier from the identification database to the location register (15, 29),
finding out the geographical information of the service user by means of the user identifier (31),
sending the geographical information and the corresponding anonymous identifier to the equipment of the service provider (12, 32),
generating the service response based on the geographical information (33),
directing the service response containing the anonymous identifier to the service gateway (14, 34),
retrieving the user identifier corresponding to the anonymous identifier from the identification database, and
directing the service response to the terminal device of the service user (11) by means of the user identifier (35, 36).

2. A method as defined in claim 1, **characterised in that** the method further comprises the step of:
eliminating the user identifier and the corresponding anonymous identifier from the identification database after a predetermined time.

3. A method as defined in claim 1, **characterised in that** the method further comprises the step of:
eliminating the user identifier and the corresponding anonymous identifier from the identification database after a predetermined number of inquiries.

4. A method as defined in any one of the preceding claims 1, 2, or 3, **characterised in that** the method further comprises the step of:
finding out the location information by retrieving it from the SMLC centre of the mobile communication network (10).

5. A method as defined in any one of the preceding claims 1, 2, or 3, **characterised in that** the method further comprises the step of:
finding out the geographical information by retrieving it from the location database maintained by the location register (15).

6. A system for protecting the user identifier of a service user from the service provider in a mobile communication network, which service to be provided/used is a content service utilizing the geographical information of the service user and which system comprises:
a terminal device of the service user (11) for sending a service request to the service provider, which service request comprises the user identifier of the service user,
equipment of the service provider (12) for generating a service response and sending it to the service user, and
a mobile communication network (10) for transmitting the service request and the service response,
**characterised in that** the system further comprises:
an encryption device (13) for generating the service-request-specific anonymous identifier corresponding to the user identifier,
an identification database for storing the user identifier and the corresponding anonymous identifier,
a service gateway (14) for retrieving the user identifier and the anonymous identifier corresponding to one another and for substituting the identifiers with one another in the service requests sent by the terminal device and in the service responses sent by the equipment of the service provider, both of them being directed to the service gateway, and
a location register (15) for retrieving the user identifier corresponding to the anonymous identifier and for retrieving the geographical information of the service user based on the user identifier.

7. A system as defined in claim 6, **characterised in that** the location register (15) comprises:
means for retrieving the geographical information from the SMLC centre of the mobile communication network (10).

8. A system as defined claim 6, **characterised in that** the location register (15) comprises:
a location database (15) for maintaining the geographical information.

9. A system as defined in any one of the preceding claims 6, 7, or 8, **characterised in that** the service gateway (14) has been arranged in conjunction with the SMS centre of the mobile communication network (10).

10. A system as defined in any one of the preceding claims 1, 2, or 3, **characterised in that** the service gateway (14) has been arranged in conjunction with the WAP gateway of the mobile communication network (10).

11. A system as defined in any one of the preceding claims 6, 7, 8, 9, or 10, **characterised in that** the user identifier is the MSISDN number of the terminal device of the service user (11).

12. A system as defined in any one of the preceding claims 6, 7, 8, 9, 10, or 11, **characterised in that** the mobile communication network (10) is a GSM network.

## Patentansprüche

1. Verfahren zum Schützen der Nutzeridentität eines Service- bzw. Dienstnutzers von dem Service Provider in einem Mobilkommunikationsnetzwerk, wobei der Dienst, der diesbezüglich zu liefern/zu nutzen ist, ein Inhaltsservice ist, welcher die geographische Information des Dienstnutzers nutzt, und wobei das Verfahren die Schritte beinhaltet:
Senden einer ersten Dienstanforderung, welche die Nutzeridentität des Dienstnutzers enthält, von der Endgeräteeinrichtung des Dienstnutzers (11, 21), Übertragen einer zweiten Dienstanforderung an das Gerät des Service Providers (12, 26),
Erzeugen einer Dienstantwort, wobei das Gerät des Service Providers (12, 33) benutzt wird,
Senden der Dienstantwort von dem Gerät des Service Providers (12, 34), und
Übertragen der Dienstantwort an die Endgeräteeinrichtung des Dienstnutzers (11, 36),
**dadurch gekennzeichnet, dass** das Verfahren ferner die Schritte beinhaltet:
Leiten der ersten Dienstanforderung an ein Service Gateway (14, 22),
Anfragen bei einer Verschlüsselungseinrichtung (13) nach einer anonymen Identität für die spezielle Dienstanforderung entsprechend der Nutzeridentität (23), Erzeugen der anonymen Identität mit Hilfe der Verschlüsselungseinrichtung (13) und Speichern der Nutzeridentität und der entsprechenden anonymen Identität in einer Identifikationsdatenbank (24),
Senden der anonymen Identität an das Service Gateway (14, 25),
Modifizieren der ersten Dienstanforderung durch Ersetzen der Nutzeridentität durch die anonyme Identität, um eine zweite Dienstanforderung zu erzeugen,
Leiten der zweiten Dienstanforderung an das Gerät des Service Providers (12, 26),
Senden einer geographischen Informationsanforderung, welche die anonyme Identität enthält, von dem Gerät des Service Providers (12) an ein Ortsregister (15, 27), Wiedergewinnen der Nutzeridentität entsprechend der anonymen Identität aus der Identifikationsdatenbank für das Ortsregister (15, 29),
Herausfinden der geographischen Information des Dienstnutzers mit Hilfe der Nutzeridentität (31),
Senden der geographischen Information und der entsprechenden anonymen Identität an das Gerät des Service Providers (12, 32),
Erzeugen der Dienstantwort, basierend auf der geographischen Information (33),
Leiten der Dienstantwort, welche die anonyme Identität enthält, an das Service Gateway (14, 34),
Wiedergewinnen der Nutzeridentität entsprechend der anonymen Identität aus der Identifikationsdatenbank, und
Leiten der Dienstantwort an die Endgeräteeinrichtung des Dienstnutzers (11) mit Hilfe der Nutzeridentität (35, 36).

2. Verfahren nach Anspruch 1, **dadurch gekennzeichnet, dass** das Verfahren ferner die Schritte beinhaltet:
Eliminieren der Nutzeridentität und der entsprechenden anonymen Identität aus der Identifikationsdatenbank nach einer vorher festgelegten Zeit.

3. Verfahren nach Anspruch 1, **dadurch gekennzeichnet, dass** das Verfahren ferner den Schritt beinhaltet:
Eliminieren der Nutzeridentität und der entsprechenden anonymen Identität von der Identifikationsdatenbank nach einer vorher festgelegten Anzahl von Anfragen.

4. Verfahren nach einem der vorausgehenden Ansprüche 1, 2 oder 3, **dadurch gekennzeichnet, dass** das Verfahren ferner den Schritt beinhaltet:
Herausfinden der Ortsinformation durch Wiedergewinnen dieser aus dem SMLC-Zentrum des Mobilkommunikationsnetzwerks (10).

5. Verfahren nach einem der vorausgehenden Ansprüche 1, 2 oder 3, **dadurch gekennzeichnet, dass** das Verfahren ferner den Schritt beinhaltet:
Herausfinden der geographischen Information durch Wiedergewinnen dieser aus der Standortdatenbank, welche durch das Standortregister (15) gepflegt wird.

6. System zum Schützen der Nutzeridentität eines Dienstnutzers von dem Service Provider in einem Mobilkommunikationsnetzwerk, wobei der Dienst, welcher zu liefern/zu nutzen ist, ein Inhaltsdienst ist, welcher die geographische Information des Dienstnutzers nutzt und wobei das System aufweist:
eine Endgeräteeinrichtung des Dienstnutzers (11), zum Senden einer Dienstanforderung an den Service Provider, wobei die Dienstanforderung die Nutzeridentität des Dienstnutzers beinhaltet,
ein Gerät des Service Providers (12) zum Erzeugen einer Dienstantwort und zum Senden dieser an den Dienstnutzer, und
ein Mobilkommunikationsnetzwerk (10) zum Übertragen der Dienstanforderung und der Dienstantwort,
**dadurch gekennzeichnet, dass** das System ferner aufweist:
eine Verschlüsselungseinrichtung (13) zum Erzeugen der anonymen Identität für die spezifische Dienstanforderung entsprechend der Nutzeridentität,
eine Identifikationsdatenbank zum Speichern der Nutzeridentität und der entsprechenden anonymen Identität, ein Service Gateway (14) zum Wiedergewinnen der Nutzeridentität und der anonymen Identität entsprechend zueinander und zum Ersetzen der Identitäten miteinander in den Dienstanforderungen, welche über die Endgeräteeinrichtung gesandt werden, und in den Dienstantworten, welche durch das Gerät des Service Providers gesandt werden, wobei beide an das Service Gateway geleitet werden, und
ein Standortregister (15) zum Wiedergewinnen der Nutzeridentität entsprechend der anonymen Identität und
zum Wiedergewinnen der geographischen Information des Dienstnutzers, basierend auf der Nutzeridentität.

7. System nach Anspruch 6, **dadurch gekennzeichnet, dass** das Standortregister (15) aufweist:
eine Vorrichtung zum Wiedergewinnen der geographischen Information aus dem SMLC-Zentrum des Mobilkommunikationsnetzwerkes (10).

8. System nach Anspruch 6, **dadurch gekennzeichnet, dass** das Standortregister (15) aufweist:
eine Standortdatenbank (15) zum Pflegen der geographischen Information.

9. System nach einem der vorausgehenden Ansprüche 6, 7 oder 8, **dadurch gekennzeichnet, dass** das Service Gateway (14) in Verbindung mit dem SMS-Zentrum des Mobilkommunikationsnetzwerkes (10) angeordnet wurde.

10. System nach einem der vorausgehenden Ansprüche 1, 2 oder 3, **dadurch gekennzeichnet, dass** das Service Gateway (14) in Verbindung mit dem WAP-Gateway des Mobilkommunikationsnetzwerkes (10) angeordnet wurde.

11. System nach einem der vorausgehenden Ansprüche 6, 7, 8, 9 oder 10, **dadurch gekennzeichnet, dass** die Nutzeridentität die MSISDN-Nummer der Endgeräteeinrichtung des Dienstnutzers (11) ist.

12. System nach einem der vorausgehenden Ansprüche 6, 7, 8, 9, 10 oder 11, **dadurch gekennzeichnet, dass** das Mobilkommunikationsnetzwerk (10) ein GSM-Netzwerk ist.

## Revendications

1. Procédé de protection de l'identification d'utilisateur d'un utilisateur de service par rapport au fournisseur de services dans un réseau de télécommunications mobiles, le service en question qui doit être fourni/utilisé étant un service de contenu utilisant les coordonnées géographiques de l'utilisateur du service, et le procédé comprenant les étapes consistant à :
envoyer une première demande de service contenant l'identification d'utilisateur de l'utilisateur du service à partir du dispositif formant terminal de l'utilisateur du service (11, 21) ;
transmettre une deuxième demande de service vers l'équipement du fournisseur de services (12, 26) ;
générer une réponse de service en utilisant l'équipement du fournisseur de services (12, 33) ;
envoyer la réponse de service à partir de l'équipement du fournisseur de services (12, 34) ; et
transmettre la réponse de service vers le dispositif formant terminal de l'utilisateur du service (11, 36) ;
**caractérisé en ce que** le procédé comprend en outre les étapes consistant à :
diriger la première demande de service vers un service passerelle (14, 22) ;
demander à un dispositif de chiffrement (13) une identification anonyme spécifique à la demande de service, correspondant à l'identification d'utilisateur (23) ;
générer l'identification anonyme au moyen du dispositif de chiffrement (13) et enregistrer l'identification d'utilisateur et l'identification anonyme correspondante dans une base de données d'identification (24) ;
envoyer l'identification anonyme vers le service passerelle (14, 25) ;
modifier la première demande de service en substituant l'identification d'utilisateur par l'identification anonyme de façon à produire une deuxième demande de service ;
diriger la deuxième demande de service vers l'équipement du fournisseur de services (12, 26) ;
envoyer une demande des coordonnées géographiques contenant l'identification anonyme à partir de l'équipement du fournisseur de services (12) vers un registre de localisation (15, 27) ;
retrouver l'identification d'utilisateur correspondant à l'identification anonyme à partir de la base de données d'identification et l'envoyer vers le registre de localisation (15, 29) ;
trouver les coordonnées géographiques de l'utilisateur du service au moyen de l'identification d'utilisateur (31) ;
envoyer les coordonnées géographiques et l'identification anonyme correspondante vers l'équipement du fournisseur de services (12, 32) ;
générer la réponse de service sur la base des coordonnées géographiques (33) ;
diriger la réponse de service contenant l'identification anonyme vers le service passerelle (14, 34) ;
retrouver l'identification d'utilisateur correspondant à l'identification anonyme à partir de la base de données d'identification ; et
diriger la réponse de service au dispositif formant terminal de l'utilisateur du service (11) au moyen de l'identification d'utilisateur (35, 36).

2. Procédé selon la revendication 1, **caractérisé en ce que** le procédé comprend en outre l'étape consistant à :
supprimer l'identification d'utilisateur et l'identification anonyme correspondante de la base de données d'identification au terme d'une période de temps prédéterminée.

3. Procédé selon la revendication 1, **caractérisé en ce que** le procédé comprend en outre l'étape consistant à :
supprimer l'identification d'utilisateur et l'identification anonyme correspondante de la base de données d'identification au terme d'un nombre de demandes prédéterminé.

4. Procédé selon l'une quelconque des revendications précédentes 1, 2 ou 3, **caractérisé en ce que** le procédé comprend en outre l'étape consistant à :
trouver les données de position en les récupérant auprès du centre SMLC du réseau de télécommunications mobiles (10).

5. Procédé selon l'une quelconque des revendications précédentes 1, 2 ou 3, **caractérisé en ce que** le procédé comprend en outre l'étape consistant à :
trouver les coordonnées géographiques en les récupérant à partir de la base de données de position tenue par le registre de localisation (15).

6. Système de protection de l'identification d'utilisateur d'un utilisateur de service par rapport au fournisseur de services dans un réseau de télécommunications mobiles, le service qui doit être fourni/utilisé étant un service de contenu utilisant les coordonnées géographiques de l'utilisateur du service, et le système comprenant :
un dispositif formant terminal de l'utilisateur du service (11) pour envoyer une demande de service vers le fournisseur de services, cette demande de service contenant l'identification d'utilisateur de l'utilisateur du service ;
un équipement du fournisseur de services (12) pour générer une réponse de service et l'envoyer vers l'utilisateur du service ; et
un réseau de télécommunications mobiles (10) pour transmettre la demande de service et la réponse de service ;
**caractérisé en ce que** le système comprend en outre :
un dispositif de chiffrement (13) pour générer l'identification anonyme spécifique à la demande de service, correspondant à l'identification d'utilisateur ;
une base de données d'identification pour enregistrer l'identification d'utilisateur et l'identification anonyme correspondante ;
un service passerelle (14) pour retrouver l'identification d'utilisateur et l'identification anonyme qui correspondent l'une à l'autre, et pour substituer les identifications l'une à l'autre dans les demandes de service envoyées par le dispositif formant terminal et dans les réponses de service envoyées par l'équipement du fournisseur de services, les deux étant dirigées vers le service passerelle ; et
un registre de localisation (15) pour retrouver l'identification d'utilisateur correspondant à l'identification anonyme et pour retrouver les coordonnées géographiques de l'utilisateur du service sur la base de l'identification d'utilisateur.

7. Système selon la revendication 6, **caractérisé en ce que** le registre de localisation (15) comprend :
des moyens pour retrouver les coordonnées géographiques à partir du centre SMLC du réseau de télécommunications mobiles (10).

8. Système selon la revendication 6, **caractérisé en ce que** le registre de localisation (15) comprend :
une base de données de position (15) pour enregistrer les coordonnées géographiques.

9. Système selon l'une quelconque des revendications précédentes 6, 7 ou 8, **caractérisé en ce que** le service passerelle (14) est agencé en collaboration avec le centre SMS du réseau de télécommunications mobiles (10).

10. Système selon l'une quelconque des revendications précédentes 1, 2 ou 3, **caractérisé en ce que** le service passerelle (14) est agencé en collaboration avec la passerelle WAP du réseau de télécommunications mobiles (10).

11. Système selon l'une quelconque des revendications précédentes 6, 7, 8, 9 ou 10, **caractérisé en ce que** l'identification d'utilisateur est le numéro MSISDN du dispositif formant terminal de l'utilisateur du service (11).

12. Système selon l'une quelconque des revendications précédentes 6, 7, 8, 9, 10 ou 11, **caractérisé en ce que** le réseau de télécommunications mobiles (10) est un réseau GSM.
